# EUROPÄISCHE PATENTSCHRIFT

(11) **EP 1 136 410 B1**
(45) Veröffentlichungstag und Bekanntmachung des Hinweises auf die Patenterteilung: **29.09.2004**
(21) Anmeldenummer: 01103414.7
(22) Anmeldetag: 14.02.2001
(51) Int. Cl.: B65H 35/04, B65H 19/30, B62B 1/26, B65H 19/12, B65H 35/06, B65H 16/08, B65H 16/00

(54) **Transport- und Abrollgerät für Bandwickel**
Transporter and dispenser for wound web
Transporteur et distributeur d'une bande enroulée

(30) Priorität: 14.03.2000 DE 20004496 U
(43) Veröffentlichungstag der Anmeldung: 26.09.2001
(73) Patentinhaber: K.N.O.L.L e.K. Metall- und Spenglertechnik, 89185 Hüttisheim (DE)
(72) Erfinder: Eberle, Joachim, 89185 Hüttisheim (DE)
(74) Vertreter: Dziewior, Joachim, Dipl.-Phys. Dr.

(56) Entgegenhaltungen:
- WO-A-93/17946
- DE-A- 2 337 663
- DE-A- 2 450 979
- DE-A- 4 206 853

## Beschreibung

Die Erfindung betrifft ein Transport- und Abrollgerät für Bandwickel, insbesondere für metallische Folien- und Blechrollen, mit zwei parallel und auf Abstand zueinander angeordneten, an einem Transportrahmen gelagerten Abrollwalzen, wobei der Transportrahmen am axial einen Ende der Abrollwalzen mit Transportrollen und am axial anderen Ende mit Stützelementen sowie mit Handgriffen versehen ist.

Derartige Transport- und Abrollgeräte sind aus der Praxis bekannt siehe DE 4 206 853 A und in ihrer Art einer Sackkarre ähnlich, wodurch die Möglichkeit besteht, die in der Regel schweren Bandwickel mit geringer Mühe zum benötigten Anwendungsort zu transportieren, wo dann das Transport- und Abrollgerät in eine horizontale Lage gebracht wird, um das benötigte Material vom Bandwickel abzuziehen. Hierbei ruht der Bandwickel dann auf den beiden Abrollwalzen, wodurch er ohne weiteres in Drehung versetzt werden kann.

Das abgewickelte und für die Weiterverarbeitung benötigte Blechmaterial wird dann üblicherweise auf eine Tischfläche oder dergleichen gezogen und dort auf das gewünschte Maß abgelängt. Dies ist, insbesondere soweit es sich beispielsweise um auf Baustellen benötigtes Kupferblech handelt, umständlich, da stets zusätzlich eine Tischfläche benötigt wird. Darüber hinaus besteht die Gefahr, daß das Kupferblech am Rande der Tischkante unerwünschte Abbiegungen erfährt.

Der Erfindung liegt die Aufgabe zugrunde, ein Transport- und Abrollgerät der eingangs genannten Art so weiterzubilden, daß die benötigten Blechstücke auf einfache Weise von dem Bandwickel abgeschnitten werden können.

Ein diese Aufgabe lösendes Transport- und Abrollgerät ist gekennzeichnet durch eine am Transportrahmen angeschlossene Schneideeinrichtung, die von einem Schneiderahmen gebildet ist, der eine axial parallel zu den Transportrollen ausgerichtete Auflagekante für das zu schneidende Blech aufweist und eine parallel zur Auflagekante verlaufende Linearführung für einen Schneidkopf trägt, dessen Schneide in Höhe der Auflagekante angeordnet ist.

Der durch die Erfindung erreichte Vorteil besteht im wesentlichen darin, daß das Abschneiden des Bleches unmittelbar an dem den Bandwickel transportierenden Gerät erfolgen kann. Dies hat den weiteren Vorteil, daß der Schnitt in unmittelbarer Nähe des Bandwickels erfolgt, also nach dem Schnitt keine längeren Blechstreifen über das Abrollgerät hinausstehen, die im übrigen eine Verletzungsgefahr darstellen können.

In bevorzugter Ausführungsform der Erfindung ist der Schneidkopf als Rollenschere ausgebildet.

Weiter ist im Rahmen der Erfindung vorgesehen, daß der Schneiderahmen achsparallel zu den Abrollwalzen gelenkig am Transportrahmen angeschlossen ist und in seiner Winkellage feststellbar ist. Dadurch ist es nicht nur möglich, den Schneiderahmen bei Nichtgebrauch eng an den Bandwickel heranzuschwenken, sondern im übrigen zum Abschneiden die Winkellage - auch in Abhängigkeit vom Durchmesser des Bandwickels - stets so einzustellen, daß der Schneidkopf senkrecht zum Blech ausgerichtet ist. Dazu kann ergänzend auch vorgesehen sein, daß die Auflagekante sowie die Linearführung höhenverstellbar am Schneidrahmen angeordnet sind.

Um ein Ausweichen des Bleches beim Ansetzen des Schneidkopfes zu verhindern, empfiehlt es sich, daß der Schneiderahmen an seinem einen Ende eine Begrenzungsplatte aufweist, die einen Anschlag für das zu schneidende Blech bildet.

Der Schneiderahmen weist zweckmäßigerweise ein gekantetes Blechprofil auf, das die Auflagekante bildet und mittels der Begrenzungsplatte und einem Profilteil am Transportrahmen befestigt ist.

Um das Abwickeln des Bandwickels zu erleichtern, kann an der Begrenzungsplatte eine einseitig gelagerte Führungsrolle vorgesehen sein, über die das abzurollende Blech abläuft.

Der Schneidkopf läuft vorteilhafter Weise mittels dreier Rillenkugellager an der Linearführung ab, wobei zwei der Kugellager auf der einen Seite und etwa mittig zu diesen das dritte Kugellager auf der gegenüberliegenden Seite der Linearführung angreift.

Schließlich kann noch am Schneiderahmen ein Längenzählwerk angeordnet sein, dessen Reibrad der benachbarten Abrollwalze anliegt. Hierdurch läßt sich die abzurollende bzw. abzuschneidende Länge des Bleches auf einfache Weise ermitteln.

Im folgenden wird die Erfindung an einem in der Zeichnung dargestellten Ausführungsbeispiel näher erläutert; es zeigen:
- Fig. 1: eine Ansicht des Transport- und Abrollgerätes in perspektivischer Darstellung,
- Fig. 2: den Gegenstand nach Fig. 1 in Rückansicht,
- Fig. 3: den Gegenstand nach Fig. 2, jedoch mit aufgelegtem Bandwickel,
- Fig. 4: eine Detaildarstellung des Gegenstandes nach Fig. 1.

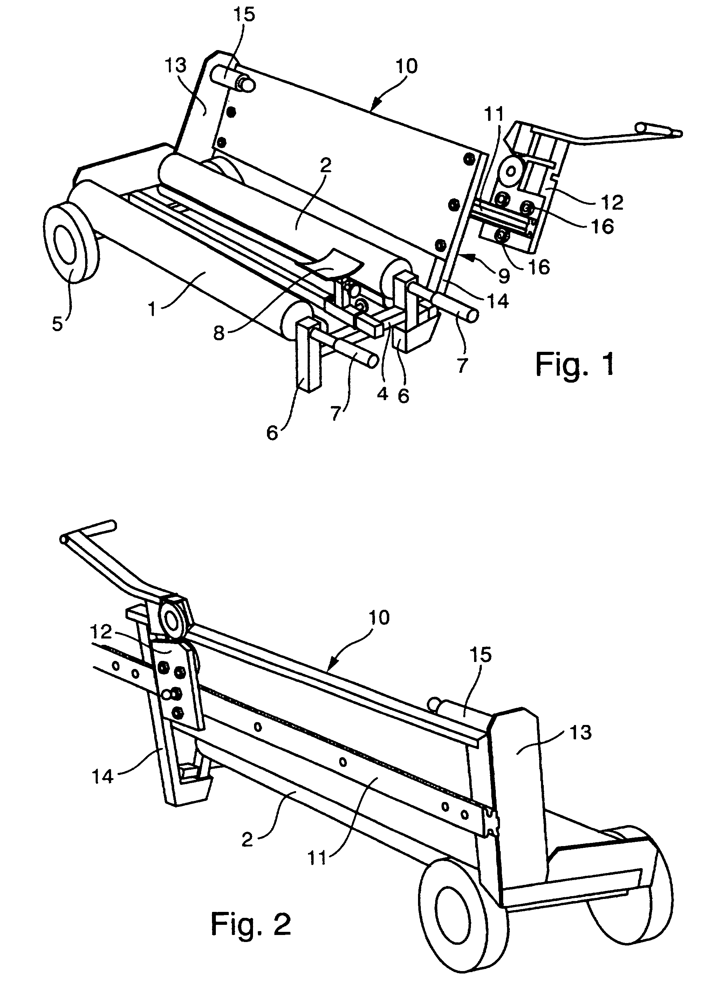

Das in der Zeichnung dargestellte Transport- und Abrollgerät ist für Bandwickel 3 vorgesehen, insbesondere für metallische Folien- und Blechrollen, wie sie beispielsweise im Spenglereibereich auf Baustellen benötigt werden. Das Gerät weist im einzelnen zwei parallel und auf Abstand zueinander angeordnete Abrollwalzen 1,2 auf, die an einem Transportrahmen 4 gelagert sind. Der Transportrahmen 4 ist am axial einen Ende der Abrollwalzen 1,2 mit Transportrollen 5 und am axial anderen Ende mit Stützelementen 6 sowie mit Handgriffen 7 versehen. Auf diese Weise läßt sich der Bandwickel 3 mit diesem Gerät in der Art einer Sackkarre transportieren, wobei - wie aus der Figur 1 zu sehen ist, zusätzlich ein Rollenhalter 8 vorgesehen ist, der ins Innere des Bandwickels 3 greift und dafür sorgt, daß beim Verfahren des Gerätes in aufgerichteter Stellung der Bandwickel 3 im wesentlichen in Anlage an den Abrollwalzen 1,2 gehalten wird.

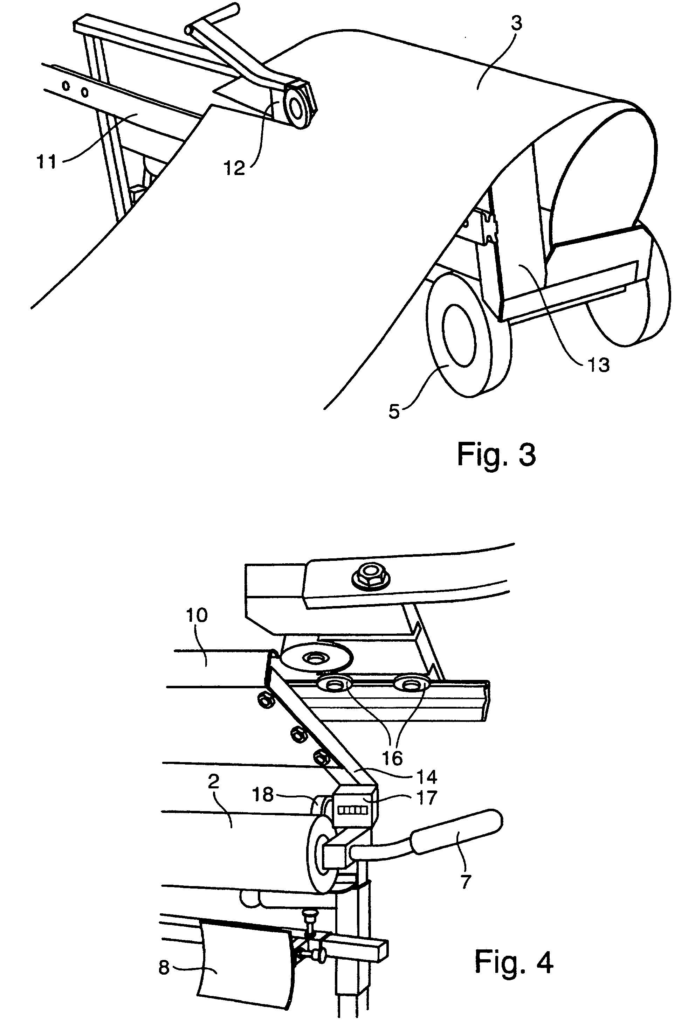

Um das vor Ort benötigte Blechmaterial abschneiden zu können, ist am Transportrahmen 4 eine Schneideeinrichtung angeschlossen, die von einem Schneiderahmen 9 gebildet ist. Dieser Schneiderahmen 9 weist eine axial parallel zu den Abrollwalzen 1,2 ausgerichtete Auflagekante 10 für das zu schneidende Blech auf. Weiter trägt der Schneiderahmen 9 eine parallel zur Auflagekante 10 verlaufende Linearführung 11 für einen Schneidkopf 12, dessen Schneide in Höhe der Auflagekante 10 angeordnet ist. Dadurch ist es möglich, wie dies in Figur 3 dargestellt ist, ohne zusätzliche Hilfsmittel und unmittelbar in der Nähe des Bandwickels 3 das benötigte Blechmaterial abzutrennen.

Der Schneidkopf 12 selbst ist in an sich bekannter Weise als Rollenschere ausgebildet.

Weiter ist der Schneidrahmen 9 gelenkig und dabei achsparallel zu den Abrollwalzen 1,2 am Transportrahmen 4 angeschlossen. Dadurch besteht die Möglichkeit, den Schneiderahmen 9 einerseits beim Transport des Gerätes unmittelbar an den Bandwickel 3 heranzuschwenken bzw. das Abrollgerät raumsparend aufzubewahren, andererseits den Schneidkopf 12 senkrecht zu dem abzulängenden Blech auszurichten, so daß optimale Schneidergebnisse erreicht werden. Dazu kann die Auflagekante 10 sowie die Linearführung 11 auch höhenverstellbar am Schneiderahmen 9 angeordnet sein, was in der Zeichnung jedoch nicht näher dargestellt ist.

Der Schneiderahmen 9 weist an seinem einen Ende eine Begrenzungsplatte 13 auf, die einen Anschlag für das zu schneidende Blech bildet. Dadurch ist sichergestellt, daß beim Ansetzen des Schneidkopfes 12 das Blech nicht seitlich ausweichen kann.

Der Schneiderahmen 9 weist im einzelnen ein gekantetes Blechprofil auf, das an seiner Oberseite die Auflagekante 10 bildet und das mittels der Begrenzungsplatte 13 und einem Profilteil 14 am Transportrahmen 4 befestigt ist.

An der Begrenzungsplatte 13 ist eine einseitig gelagerte Führungsrolle 15 vorgesehen, über die das Blech beim Abziehen von dem Bandwickel 3 abläuft.

Der Schneidkopf 12 ist, wie sich insbesondere aus den Figuren 1 und 4 ergibt, mittels dreier Rillenkugellager 16 an der Linearführung 11 gelagert.

Um die Länge des abgewickelten bzw. abzuschneidenden Bandes leicht ermitteln zu können, ist am Schneiderahmen 9 ein Längenzählwerk 17 angeordnet, dessen Reibrad 18 der benachbarten Abrollwalze 2 anliegt.

## Patentansprüche

1. Transport- und Abrollgerät für Bandwickel (3), insbesondere für metallische Folien- und Blechrollen, mit zwei parallel und auf Abstand zueinander angeordneten, an einem Transportrahmen (4) gelagerten Abrollwalzen (1,2), wobei der Transportrahmen (4) am axial einen Ende der Abrollwalzen (1,2) mit Transportrollen (5) und am axial anderen Ende mit Stützelementen (6) sowie mit Handgriffen (7) versehen ist, **gekennzeichnet durch** eine am Transportrahmen (4) angeschlossene Schneideeinrichtung, die von einem Schneiderahmen (9) gebildet ist, der eine axial parallel zu den Transportrollen (5) ausgerichtete Auflagekante (10) für das zu schneidende Blech aufweist und eine parallel zur Auflagekante (10) verlaufende Linearführung (11) für einen Schneidkopf (12) trägt, dessen Schneide in Höhe der Auflagekante (10) angeordnet ist.

2. Transport- und Abrollgerät nach Anspruch 1, **dadurch gekennzeichnet, daß** der Schneidkopf (12) als Rollenschere ausgebildet ist.

3. Transport- und Abrollgerät nach Anspruch 1 oder 2, **dadurch gekennzeichnet, daß** der Schneiderahmen (9) achsparallel zu den Abrollwalzen (1,2) gelenkig am Transportrahmen (4) angeschlossen ist und in seiner Winkellage feststellbar ist.

4. Transport- und Abrollgerät nach einem der Ansprüche 1 bis 3, **dadurch gekennzeichnet, daß** die Auflagekante (10) sowie die Linearführung (11) höhenverstellbar am Schneiderahmen (9) angeordnet sind.

5. Transport- und Abrollgerät nach einem der Ansprüche 1 bis 4, **dadurch gekennzeichnet, daß** der Schneiderahmen (9) an seinem einen Ende eine Begrenzungsplatte (13) aufweist, die einen Anschlag. für das zu schneidende Blech bildet.

6. Transport- und Abrollgerät nach einem der Ansprüche 1 bis 5, **dadurch gekennzeichnet, daß** der Schneiderahmen (9) ein gekantetes Blechprofil aufweist, das die Auflagekante (10) bildet und mittels der Begrenzungsplatte (13) und einem Profilteil (14) am Transportrahmen (4) befestigt ist.

7. Transport- und Abrollgerät nach einem der Ansprüche 1 bis 6, **dadurch gekennzeichnet, daß** an der Begrenzungsplatte (13) eine einseitig gelagerte Führungsrolle (15) vorgesehen ist, über die das abzurollende Blech abläuft.

8. Transport- und Abrollgerät nach einem der Ansprüche 1 bis 7, **dadurch gekennzeichnet, daß** der Schneidkopf (12) mittels dreier Rillenkugellager (16) an der Linearführung (11) abläuft.

9. Transport- und Abrollgerät nach einem der Ansprüche 1 bis 8, **dadurch gekennzeichnet, daß** am Schneiderahmen (9) ein Längenzählwerk (17) angeordnet ist, dessen Reibrad (18) der benachbarten Abrollwalze (2) anliegt.

## Claims

1. A transport and unrolling apparatus for strip coils (3), in particular for metallic foil and sheet metal rolls, comprising two unrolling rollers (1, 2) which are arranged in parallel and mutually spaced relationship and which are mounted on a transport frame (4), wherein at the axially one end of the unrolling rollers (1, 2) the transport frame (4) is provided with transport rollers (5) and at the axially other end it is provided with support elements (6) and with handles (7), **characterised by** a cutting device connected to the transport frame (4) and formed by a cutting frame (9) which has a support edge (10) oriented axially parallel to the transport rollers (5) for the sheet metal to be cut and a linear guide (11) extending parallel to the support edge (10) for a cutting head (12), the cutting edge of which is arranged at the height of the support edge (10).

2. A transport and unrolling apparatus according to claim 1 **characterised in that** the cutting head (12) is in the form of a cutting shears assembly.

3. A transport and unrolling apparatus according to claim 1 or claim 2 **characterised in that** the cutting frame (9) is connected to the transport frame (4) pivotably in axis-parallel relationship with the unrolling rollers (1, 2) and can be fixed in its angular position.

4. A transport and unrolling apparatus according to one of claims 1 to 3 **characterised in that** the support edge (10) and the linear guide (11) are arranged adjustably in respect of height on the cutting frame (9).

5. A transport and unrolling apparatus according to one of claims 1 to 4 **characterised in that** at its one end the cutting frame (9) has a delimitation plate (13) forming an abutment for the sheet metal to be cut.

6. A transport and unrolling apparatus according to one of claims 1 to 5 **characterised in that** the cutting frame (9) has a turned-edge sheet metal profile member which forms the support edge (10) and which is fixed to the transport frame (4) by means of the delimitation plate (13) and a profile member (14).

7. A transport and unrolling apparatus according to one of claims 1 to 6 **characterised in that** provided on the delimitation plate (13) is a guide roller (15) which is supported at one end and over which the sheet metal to be unrolled runs off.

8. A transport and unrolling apparatus according to one of claims 1 to 7 **characterised in that** the cutting head (12) runs on the linear guide (11) by means of three grooved ball bearing units (16).

9. A transport and unrolling apparatus according to one of claims 1 to 8 **characterised in that** arranged on the cutting frame (9) is a length metering mechanism (17) whose friction wheel (18) bears against the adjacent unrolling roller (2).

## Revendications

1. Appareil de transport et de distribution d'une bande enroulée (3), notamment pour des rouleaux de feuille et de tôle métalliques, comportant deux cylindres de déroulement (1, 2) parallèles et montés espacés l'un de l'autre sur un châssis de transport (4), ce châssis étant équipé à une extrémité axiale des cylindres de déroulement (1, 2) de rouleaux de transport (5) et, à l'autre extrémité axiale d'éléments de soutien (6) ainsi que de poignées (7),
**caractérisé en ce qu'**
au châssis de transport (4) est raccordé un dispositif de coupe qui est constitué par un cadre de coupe (9) qui présente, pour la tôle à couper, un bord d'appui (10) dont l'axe est orienté parallèlement aux rouleaux de transport (5), et qui porte un guidage linéaire (11) parallèle au bord d'appui (10) et destiné à une tête de coupe (12) effectuant une coupe à la hauteur du bord d'appui (10).

2. Appareil de transport et de distribution selon la revendication 1,
**caractérisé en ce que**
la tête de coupe (12) est constituée par une cisaille à molette.

3. Appareil de transport et de distribution selon la revendication 1 ou 2,
**caractérisé en ce que**
le cadre de coupe (9) est raccordé au châssis de transport (4) en étant articulé autour d'un axe parallèle au cylindre de déroulement (1, 2) et peut avoir sa position angulaire fixée.

4. Appareil de transport et de distribution selon une des revendications 1 à 3,
**caractérisé en ce que**
le bord d'appui (10) ainsi que les guidages linéaires (11) sont montés réglables en hauteur sur le cadre de coupe (9).

5. Appareil de transport et de distribution selon une des revendications 1 à 4,
**caractérisé en ce que**
ce cadre de coupe (9) présente à une extrémité une plaque de délimitation (13) qui constitue une butée pour la tôle à couper.

6. Appareil de transport et de distribution selon une des revendications 1 à 5,
**caractérisé en ce que**
le cadre de coupe (9) présente un profilé de tôle avec arête qui constitue le bord d'appui (10) et qui est fixé par l'intermédiaire de la plaque de délimitation (13) et d'une partie profilée (14) sur le châssis de transport (4).

7. Appareil de transport et de distribution selon une des revendications 1 à 6,
**caractérisé en ce que**
sur la plaque de délimitation (13) est prévu un rouleau de guidage (15) monté d'un côté et sur lequel circule la tôle à dérouler.

8. Appareil de transport et de distribution selon une des revendications 1 à 7,
**caractérisé en ce que**
la tête de coupe (12) circule sur le guidage linéaire (11) par l'intermédiaire de trois roulements à billes à gorges profondes (16).

9. Appareil de transport et de distribution selon une des revendications 1 à 8,
**caractérisé en ce que**
sur le cadre de coupe (9) est monté un compteur de longueur (17) dont la roue de friction (12) est en contact avec le signal de déroulement (2) voisin.
